(19) Europäisches Patentamt
European Patent Office
Office européen des brevets

(11) **EP 2 659 774 A1**

(12) **EUROPEAN PATENT APPLICATION**

(43) Date of publication:
**06.11.2013 Bulletin 2013/45**

(51) Int Cl.:
**A01N 43/90** (2006.01)　　**A01N 43/54** (2006.01)

(21) Application number: **12166258.9**

(22) Date of filing: **01.05.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **DSM IP Assets B.V.
6411 TE Heerlen (NL)**

(72) Inventors:
• **Stark, Jacobus
6100 AC Echt (NL)**
• **Sack, Eva, Louise, Wilhelmine
6100 AC Echt (NL)**

(74) Representative: **Biermann, Jan et al
DSM Intellectual Property
P.O. Box 4
6100 AC Echt (NL)**

(54) **Antifungal compositions**

(57) The present invention relates to antifungal compositions and their use in the treatment of agricultural products.

## Description

### Field of the invention

The present invention discloses new antimicrobial compositions to control plant diseases and to prevent microbial spoilage of crops.

### Background of the invention

It is estimated that about 25% of the world crop production is lost due to microbial spoilage, of which spoilage by fungi is by far the most important cause. Not only from an economical point of view, but also from a humane point of view it is of great importance to prevent spoilage of food products. After all, in many parts of the world people suffer from hunger.

Success in combating plant and crop diseases and in reducing the damage they cause to yields and quality depends greatly on the timely application of fungicides. The prolonged and frequent use of many fungicides such as *e.g.* benzamidazoles has contributed to reduce their effectiveness thanks to the development of phenomena of resistance.

Fungicides that inhibit targets within the fungal sterol biosynthesis represent an important class of agricultural fungicides. They consist of various chemical groups, including the pyrimidines. The first generation of pyrimidine fungicides were commercialized in the 1970s. Despite the development of new pyrimidines, these fungicides have not been immune to challenges in their development and maintenance. A large concern has been resistance development. Resistance to pyrimidine fungicides has been observed on several crops and diseases now (see Gubler *et al.,* 1996; Schepers, 1984; Brent *et al.,* 1989).

For many decades, the polyene macrolide antimycotic natamycin has been used to prevent fungal growth on food products such as cheeses and sausages. This natural preservative, which is produced by fermentation using *Streptomyces natalensis,* is widely used throughout the world as a food preservative and has a long history of safe use in the food industry. It is very effective against all known food spoilage fungi. Although natamycin has been applied for many years in *e.g.* the cheese industry, up to now development of resistant fungal species has never been observed.

Consequently, it can be concluded that there is a severe need for more effective antimicrobial compositions, *e.g.* antifungal compositions, for the treatment of fungal growth in and on plants and crops.

### Description of the invention

The present invention solves the problem by providing a new synergistic antimicrobial, *e.g.* antifungal, composition comprising a polyene antifungal compound and at least one antifungal compound from the family of pyrimidine fungicides. As used herein, the term "synergistic" means that the combined effect of the antifungal compounds when used in combination is greater than their additive effects when used individually.

In general, synergistic activity of two active ingredients can be tested in for example the analysis of variance model using the treatment interaction stratum (see Slinker, 1998). Relative efficacy can be calculated by means of the following formula: ((value of evolution status of untreated control - value of evolution status of composition) / (value of evolution status of untreated control)) * 100. An interaction coefficient can then be calculated by means of the following formula: ((relative efficacy of combination compound A + compound B) / (relative efficacy of compound A + relative efficacy of compound B)) * 100. An interaction coefficient larger than 100 indicates synergy between the compounds.

Alternatively, synergy can be calculated as follows: the antifungal activity (in %) of the individual active ingredients can be determined by calculating the reduction in mould growth observed on products treated with the active ingredients in comparison to the mould growth on products treated with a control composition. The expected antifungal activity (E in %) of the combined antifungal composition comprising both active ingredients can be calculated according to the Colby equation (Colby, 1967) : $E = X + Y - [(X \cdot Y) / 100]$, wherein X and Y are the observed antifungal activities (in %) of the individual active ingredients X and Y, respectively. If the observed antifungal activity (O in %) of the combination exceeds the expected antifungal activity (E in %) of the combination and the synergy factor O/E is thus > 1.0, the combined application of the active ingredients leads to a synergistic antifungal effect.

The term "pyrimidine fungicide" as used herein includes hydroxyl- 2- amino- pyrimidine fungicides, pyrimidinamine fungicides, and pyrimidine fungicides. The term specifically excludes anilino- pyrimidines. Examples of anilino- pyrimidines are cyprodinil, mepanipyrim and pyrimethanil.

In an embodiment of the invention, the at least one antifungal compound from the family of pyrimidine fungicides is selected from the group consisting of bupirimate, diflumetorim, dimethirimol, ethirimol, fenarimol, ferimzone, nuarimol and triarimol.

In an embodiment the compositions may also contain two or more different antifungal compounds from the family of pyrimidine fungicides. It is to be understood that derivatives of antifungal compounds from the family of pyrimidine fungicides including, but not limited to, salts or solvates of antifungal compounds from the family of pyrimidine fungicides or modified forms of antifungal compounds from the family of pyrimidine fungicides may also be applied in the compositions of the invention. Examples of commercial products containing pyrimidine fungicides such as fenarimol are products with the brand names Rimidin® and Rubigan®. Examples of commercial products containing pyrimidine fungicides such as nuarimol are products with the brand names Trimidal®. Examples of commercial products containing pyrimidine fungicides such as dimethirimol are products with the brand names Milcurb®. Said commercial products can be incorporated in the present invention.

In an embodiment the polyene antifungal compound is selected from the group consisting of natamycin, nystatin, amphotericin B, trienin, etruscomycin, filipin, chainin, dermostatin, lymphosarcin, candicidin, aureofungin A, aureofungin B, hamycin A, hamycin B and lucensomycin. In a preferred embodiment the polyene antifungal compound is natamycin. In an embodiment the compositions may also contain two or more different polyene antifungal compounds. It is to be understood that derivatives of polyene antifungal compounds including, but not limited to, salts or solvates of polyene antifungal compounds or modified forms of polyene antifungal compounds may also be applied in the compositions of the invention. Examples of commercial products containing natamycin are the products with the brand name Delvocid®. Such products are produced by DSM Food Specialties (The Netherlands) and may be solids containing *e.g.* 50% (w/w) natamycin or liquids comprising between *e.g.* 2-50% (w/v) natamycin. Said commercial products can be incorporated in the compositions of the invention.

The composition of the present invention generally comprises from about 0.005 g/l to about 100 g/l and preferably from about 0.01 g/l to about 50 g/l of a polyene antifungal compound. Preferably, the amount is from 0.01 g/l to 3 g/l.

The composition of the present invention generally comprises from about 0.0001 g/l to about 2000 g/l and preferably from about 0.0005 g/l to about 1500 g/l of an antifungal compound from the family of pyrimidine fungicides. More preferably, the amount is from 0.001 g/l to 1000 g/l.

In an embodiment the composition of the present invention further comprises at least one additional compound selected from the group consisting of a sticking agent, a carrier, a colouring agent, a protective colloid, an adhesive, a herbicide, a fertilizer, a thickening agent, a sequestering agent, a thixotropic agent, a surfactant, a further antimicrobial compound, a detergent, a preservative, a spreading agent, a filler, a spray oil, a flow additive, a mineral substance, a solvent, a dispersant, an emulsifier, a wetting agent, a stabiliser, an antifoaming agent, a buffering agent, an UV-absorber and an antioxidant. A further antimicrobial antifungal compound may be an antifungal compound (*e.g.* imazalil, thiabendazole or chlorthalonil) or a compound to combat insects, nematodes, mites and/or bacteria. Of course, the compositions according to the invention may also comprise two or more of any of the above additional compounds. Any of the above mentioned additional compounds may also be combined with the polyene antifungal compound and/or the at least one antifungal compound from the family of pyrimidine fungicides in case the antifungal compounds are applied separately. In an embodiment the additional compounds are additives acceptable for the specific use, *e.g.* food, feed, medicine, cosmetics or agriculture. Additional compounds suitable for use in food, feed, medicine, cosmetics or agriculture are known to the person skilled in the art.

In a specific embodiment the further antimicrobial compound is a natural crop protection compound belonging to the group of phosphites, *e.g.* $KH_2PO_3$ or $K_2HPO_3$ or a mixture of both phosphite salts. Phosphite containing compounds as used herein means compounds comprising a phosphite group, *i.e.* $PO_3$ (in the form of *e.g.* $H_2PO_3-$, $HPO_3^{2-}$ or $PO_3^{3-}$) or any compound which allows the release of a phosphite ion including compounds such as phosphorous acid and phosphonic acid as well as derivatives thereof such as esters and/or alkali metal or alkaline earth metal salts thereof. In case the compositions of the present invention comprise a polyene antifungal compound (*e.g.* natamycin) and at least one phosphite containing compound, they preferably comprise 0.1 g or less lignosulphonate, more preferably 0.1 g or less polyphenol, per gram polyene antifungal compound. Preferably, they comprise 0.01 g or less lignosulphonate, more preferably 0.01 g or less polyphenol, per gram polyene antifungal compound. In particular, they are free of lignosulphonate and preferably free of polyphenol. Suitable examples of phosphite containing compounds are phosphorous acid and its (alkali metal or alkaline earth metal) salts such as potassium phosphites *e.g.* $KH_2PO_3$ and $K_2HPO_3$, sodium phosphites and ammonium phosphites, and ($C_1$-$C_4$) alkyl esters of phosphorous acid and their salts such as aluminum ethyl phosphite (fosetyl- Al), calcium ethyl phosphite, magnesium isopropyl phosphite, magnesium isobutyl phosphite, magnesium sec- butyl phosphite and aluminum N-butyl phosphite. Of course, mixtures of phosphite containing compounds are also encompassed. A mixture of *e.g.* $KH_2PO_3$ and $K_2HPO_3$ can easily be obtained by *e.g.* adding KOH or $K_2CO_3$ to a final pH of 5.0- 6.0 to a $KH_2PO_3$ solution. As indicated above, precursor- type compounds which in the crop or plant are metabolized into phosphite compounds can also be included in the compositions of the present invention. Examples are phosphonates such as the fosetyl- aluminium complex. In *e.g.* a crop or plant the ethyl phosphonate part of this molecule is metabolized into a phosphite. An example of such a compound in the commercial ethyl hydrogen phosphonate product called Aliette® (Bayer, Germany). The ratio of phosphite to natamycin (in weight) in the compositions is in general between 2: 1 to 500: 1 (w/w), preferably between 3: 1 to 300: 1 (w/w) and more preferably between 5: 1 to 200: 1 (w/w).

Compositions according to the invention may have a pH of from 1 to 10, preferably of from 2 to 9, more preferably of from 3 to 8 and most preferably of from 4 to 7. They may be solid, *e.g.* powder compositions, or may be liquid. The compositions of the present invention can be aqueous or non-aqueous ready-to-use compositions, but may also be aqueous or non-aqueous concentrated compositions/suspensions or stock compositions, suspensions and/or solutions which before use have to be diluted with a suitable diluent such as water or a buffer system. Alternatively, the compositions of the invention can also be used to prepare coating emulsions. The compositions of the present invention can also have the form of concentrated dry products such as *e.g.* powders, granulates and tablets. They can be used to prepare compositions for immersion or spraying of products such as agricultural products including plants, crops, vegetables and/or fruits. Of course, the above is also applicable when the polyene antifungal compound and the at least one antifungal compound from the family of pyrimidine fungicides are applied as separate compositions.

In a further aspect the invention relates to a kit comprising a polyene antifungal compound and at least one antifungal compound from the family of pyrimidine fungicides. The polyene antifungal compound and the at least one antifungal compound from the family of pyrimidine fungicides may be present in two separate packages, *e.g.* containers. The components of the kit may be either in dry form or liquid form in the package. If necessary, the kit may comprise instructions for dissolving the compounds. In addition, the kit may contain instructions for applying the compounds.

In a further aspect the invention pertains to a method for protecting a product against fungi by treating the product with a polyene antifungal compound and at least one antifungal compound from the family of pyrimidine fungicides. In addition, the product can be treated with other antifungal and/or antimicrobial compounds either prior to, concomitant with or after treatment of the products with the polyene antifungal compound and the at least one antifungal compound from the family of pyrimidine fungicides. The product may be treated by sequential application of the polyene antifungal compound and the at least one antifungal compound from the family of pyrimidine fungicides or *vice versa.* Alternatively, the product may be treated by simultaneous application of the polyene antifungal compound and the at least one antifungal compound from the family of pyrimidine fungicides. In case of simultaneous application, the compounds can be present in different compositions that are applied simultaneously or the compounds may be present in a single composition. In yet another embodiment the product may be treated by separate or alternate modes of applying the antifungal compounds. In an embodiment the invention is directed to a process for the treatment of products by applying the polyene antifungal compound and the at least one antifungal compound from the family of pyrimidine fungicides to the products. By applying the compounds fungal growth on or in the products can be prevented. In other words, the compounds protect the products from fungal growth and/or from fungal infection and/or from fungal spoilage. The compounds can also be used to treat products that have been infected with a fungus. By applying the compounds the disease development due to fungi on or in these products can be slowed down, stopped or the products may even be cured from the disease. In an embodiment of the invention the products are treated with a composition or kit according to the invention. In an embodiment the product is a food, feed, pharmaceutical, cosmetic or agricultural product. In a preferred embodiment the product is an agricultural product.

The polyene antifungal compound and the at least one antifungal compound from the family of pyrimidine fungicides, the compositions according to the invention and the kits according to the invention can be applied to the products by spraying. Other methods suitable for applying these compounds, compositions and kits in liquid form to the products are also a part of the present invention. These include, but are not limited to, dipping, watering, drenching, introduction into a dump tank, vaporizing, atomizing, fogging, fumigating, painting, brushing, dusting, foaming, spreading-on, packaging and coating (*e.g.* by means of wax or electrostatically). In addition, the antifungal compounds may also be injected into the soil. Spraying applications using automatic systems are known to reduce the labour costs and are cost-effective. Methods and equipment well-known to a person skilled in the art can be used for that purpose. The compositions according to the invention can be regularly sprayed, when the risk of infection is high. When the risk of infection is lower spray intervals may be longer. Depending on the type of application, the amount of polyene antifungal compound applied may vary from 5 ppm to 10,000 ppm, preferably from 10 ppm to 5,000 ppm and most preferably from 20 to 1,000 ppm. Depending on the type of application, the amount of the at least one antifungal compound from the family of pyrimidine fungicides applied may vary from 10 ppm to 5,000 ppm, preferably from 20 ppm to 3,000 ppm and most preferably from 50 to 1,000 ppm.

In a specific embodiment the agricultural product can be treated post-harvest. By using a polyene antifungal compound and the at least one antifungal compound from the family of pyrimidine fungicides the control of post-harvest and/or storage diseases is achieved for a long period of time to allow transport of the harvested agricultural product over long distances and under various storage conditions with different controlled atmosphere systems in respect of temperature and humidity. Post-harvest storage disorders are *e.g.* lenticel spots, scorch, senescent breakdown, bitter pit, scald, water core, browning, vascular breakdown, $CO_2$ injury, $CO_2$ or $O_2$ deficiency, and softening. Fungal diseases may be caused for example by the following fungi: *Blumeria spp., e.g. Blumeria graminis; Uncinula spp., e.g. Uncinula necator, Leveillula spp., e.g. Leveillula taurica; Podosphaera spp., e.g. Podosphaera leucotricha, Podosphaera fusca, Podosphaera aphanis; Microsphaera spp., e.g. Microsphaera syringae; Sawadaea spp., e.g. Sawadaea tulasnei; Mycosphaerella spp., e.g. Mycosphaerella musae, Mycosphaerella fragariae, Mycosphaerella citri; Mucor spp., e.g. Mucor piriformis;*

*Monilinia spp., e.g. Monilinia fructigena, Monilinia laxa; Phomopsis spp., Phomopsis natalensis; Colletotrichum spp., e.g. Colletotrichum musae, Colletotrichum gloeosporioides, Colletotrichum coccodes; Verticillium spp., e.g. Verticillium theobromae; Nigrospora spp.; Botrytis spp., e.g. Botrytis cinerea; Diplodia spp., e.g. Diplodia citri; Pezicula spp.; Alternaria spp., e.g. Alternaria citri, Alternaria alternata; Septoria spp., e.g. Septoria depressa; Venturia spp., e.g. Venturia inaequalis, Venturia pyrina; Rhizopus spp., e.g. Rhizopus stolonifer, Rhizopus oryzae; Glomerella spp., e.g. Glomerella cingulata; Sclerotinia spp., e.g. Sclerotinia fruiticola; Ceratocystis spp., e.g. Ceratocystis paradoxa; Fusarium spp., e.g. Fusarium semitectum, Fusarium moniliforme, Fusarium solani, Fusarium oxysporum; Cladosporium spp., e.g. Cladosporium fulvum, Cladosporium cladosporioides, Cladosporium cucumerinum, Cladosporium musae; Penicillium spp., e.g. Penicillium funiculosum, Penicillium expansum, Penicillium digitatum, Penicillium italicum; Phytophthora spp., e.g. Phytophthora citrophthora, Phytophthora fragariae, Phytophthora cactorum, Phytophthora parasitica; Phacydiopycnis spp., e.g. Phacydiopycnis malirum; Gloeosporium spp., e.g. Gloeosporium album, Gloeosporium perennans, Gloeosporium fructigenum, Gloeosporium singulata; Geotrichum spp., e.g. Geotrichum candidum; Phlyctaena spp., e.g. Phlyctaena vagabunda; Cylindrocarpon spp., e.g. Cylindrocarpon mali; Stemphyllium spp., e.g. Stemphyllium vesicarium; Thielaviopsis spp., e.g. Thielaviopsis paradoxy; Aspergillus spp., e.g. Aspergillus niger, Aspergillus carbonarius; Nectria spp., e.g. Nectria galligena; Cercospora spp., e.g. Cercospora angreci, Cercospora apii, Cercospora atrofiliformis, Cercospora musae, Cercospora zeae-maydis.*

Another aspect of the present invention relates to the use of a polyene antifungal compound and at least one antifungal compound from the family of pyrimidine fungicides to protect a product against fungi. As indicated above, the compounds may be used, *e.g.* applied, sequentially or simultaneously. In an embodiment the invention relates to a use, wherein a composition or kit according to the invention is applied to the product. In an embodiment the product is a food, feed, pharmaceutical, cosmetic or agricultural product. In a preferred embodiment the product is an agricultural product.

In a specific embodiment the polyene antifungal compound and at least one antifungal compound from the family of pyrimidine fungicides can be used in medicine, *e.g.* to treat and/or prevent fungal diseases. The polyene antifungal compound and at least one antifungal compound from the family of pyrimidine fungicides can for instance be used in the form of a pharmaceutical composition. The composition may further comprise pharmaceutically acceptable excipients. The antifungal compounds may be administered orally or parenterally. The type of composition is dependent on the route of administration.

A further aspect of the invention is directed to a product treated with a polyene antifungal compound and at least one antifungal compound from the family of pyrimidine fungicides. In an embodiment the product is treated with a composition or kit according to the invention. The invention is therefore directed to a product comprising a polyene antifungal compound and at least one antifungal compound from the family of pyrimidine fungicides. The treated products may comprise a polyene antifungal compound and at least one antifungal compound from the family of pyrimidine fungicides on their surface and/or inside the product. Alternatively, the treated products may comprise a coating comprising these compounds. In an embodiment the treated products comprise from 0.000001 to 200 mg/dm$^2$, preferably 0.00001 to 100 mg/dm$^2$, more preferably from 0.00005 to 10 mg/dm$^2$ of the polyene antifungal compound on their surface. In a further embodiment they comprise from 0.000001 to 200 mg/dm$^2$, preferably 0.00001 to 100 mg/dm$^2$, more preferably from 0.00005 to 10 mg/dm$^2$ of the at least one antifungal compound from the family of pyrimidine fungicides on their surface. In an embodiment the product is a food, feed, pharmaceutical, cosmetic or agricultural product. In a preferred embodiment the product is an agricultural product.

The term "food products" as used herein is to be understood in a very broad sense and includes, but is not limited to, cheese, cream cheese, shredded cheese, cottage cheese processed cheese, sour cream, dried fermented meat product including salamis and other sausages, wine, beer, yoghurt, juice and other beverages, salad dressing, cottage cheese dressing, dips, bakery products and bakery fillings, surface glazes and icing, spreads, pizza toppings, confectionery and confectionery fillings, olives, olive brine, olive oil, juices, tomato purees and paste, condiments, and fruit pulp and the like food products.

The term "feed products" as used herein is also to be understood in a very broad sense and includes, but is not limited to, pet food, broiler feed, etc.

The term "pharmaceutical product" as used herein is also to be understood in a very broad sense and includes products comprising an active molecule such as a drug, agent, or pharmaceutical compound and optionally a pharmaceutically acceptable excipient, *i.e.* any inert substance that is combined with the active molecule for preparing an agreeable or convenient dosage form.

The term "cosmetic product" as used herein is also to be understood in a very broad sense and includes products that are used for protecting or treating horny tissues such as skin and lips, hair and nails from drying by preventing transpiration of moisture thereof and further conditioning the tissues as well as giving good appearance to these tissues. Products contemplated by the term "cosmetic product" include, but are not limited to, moisturizers, personal cleansing products, occlusive drug delivery patches, nail polish, powders, wipes, hair conditioners, skin treatment emulsions, shaving creams and the like.

The term "agricultural products" as used herein is also to be understood in a very broad sense and includes, but is not limited to, cereals, *e.g.* wheat, barley, rye, oats, rice, sorghum and the like; beets, *e.g.* sugar beet and fodder beet; pome and stone fruit and berries, *e.g.* apples, pears, plums, apricots, peaches, almonds, cherries, strawberries, raspberries and blackberries; leguminous plants, *e.g.* beans, lentils, peas, soy beans; oleaginous plants, *e.g.* rape, mustard, poppy, olive, sunflower, coconut, castor-oil plant, cocoa, ground-nuts; cucurbitaceae, *e.g.* pumpkins, gherkins, melons, cucumbers, squashes, aubergines; fibrous plants, *e.g.* cotton, flax, hemp, jute; citrus fruit, *e.g.* oranges, lemons, grapefruits, mandarins, limes; tropical fruit, *e.g.* papayas, passion fruit, mangos, carambolas, pineapples, bananas, kiwis; vegetables, *e.g.* spinach, lettuce, asparagus, brassicaceae such as cabbages and turnips, carrots, onions, tomatoes, potatoes, seed-potatoes, hot and sweet peppers; laurel-like plants, *e.g.* avocado, cinnamon, camphor tree; or products such as maize, tobacco, nuts, coffee, sugarcane, tea, grapevines, hops, rubber plants, as well as ornamental plants, e.g. cut flowers, roses, tulips, lilies, narcissus, crocuses, hyacinths, dahlias, gerbera, carnations, fuchsias, chrysanthemums, and flower bulbs, shrubs, deciduous trees and evergreen trees such as conifers, plants and trees in greenhouses. It includes, but is not limited to, plants and their parts, fruits, seeds, cuttings, cultivars, grafts, bulbs, tubers, root-tubers, rootstocks, cut flowers and vegetables.

A method for preparing a composition as described herein is another aspect of the present invention. The method comprises adding a polyene antifungal compound to at least one antifungal compound from the family of pyrimidine fungicides. The compounds may for instance be added separately to an aqueous composition and mixed, followed, if necessary, by adjustment of the pH, viscosity, etc. If added separately, some or all of the separate compounds may be in powder form, but alternatively some or all may also be in liquid form. The compounds may for instance also be added to one another in powder form and mixed to obtain a powdered composition. The powdered composition may then be added to an aqueous composition.

**EXAMPLES**

**Example 1**

*Treatment of bananas*

Four organic, unripe (green) bananas are used per treatment. The peel of each banana is wounded thrice using a cork borer according to the method described by de Lapeyre de Bellaire and Dubois (1987). Subsequently, each wound is inoculated with 15 $\mu$l of a *Fusarium proliferatum* suspension containing $1 \times 10^5$ of spores/ml. After incubation for 4 hours at 20°C, each banana wound is treated with 100 $\mu$l of a freshly prepared aqueous antifungal composition comprising either natamycin (DSM Food Specialties, Delft, The Netherlands), bupirimate or both. In addition, the pyrimidine fungicides diflumetorim, dimethirimol, ethirimol, fenarimol, ferimzone, nuarimol and triarimol alone or in combination with natamycin are tested. The antifungal compositions comprise 1.00% (w/w) methylhydroxyethylcellulose (MHEC), 0.40% (w/w) xanthan gum, 0.20% (w/w) anti-foaming agent, 0.30% (w/w) citric acid, 0.39% (w/w) lactic acid and 0.11 % (w/w) potassium sorbate. The pH of the composition is 4.0. A composition without natamycin or a pyrimidine fungicide is used as control. The treated, unripe bananas are incubated in a closed box in the dark at 20°C and a relative air humidity of 95%, which is obtained in the presence of a saturated $Na_2HPO_4$ aqueous solution. During the first 20 days of incubation, a ripe (yellow) banana is included in the closed box to elevate the ethylene gas level and thus induce ripening of the treated, unripe bananas.

During incubation, the degree of mould growth on the bananas is assessed in a twofold manner: (i) the number of moulded wounds per total of 12 wounds is counted; and (ii) the antifungal activity (in %) of the individual active ingredients is determined by calculating the reduction in mould growth observed on the banana wounds treated with the antifungal composition in comparison to the mould growth on the banana wounds treated with the control composition. The expected antifungal activity (E in %) of the combined antifungal composition comprising both active ingredients is calculated according to the Colby equation (Colby, 1967):

$$E = X + Y - [(X \cdot Y) / 100]$$

wherein X and Y are the observed antifungal activities (in %) of the individual active ingredients X and Y, respectively. If the observed antifungal activity (O in %) of the combination exceeds the expected antifungal activity (E in %) of the combination and the synergy factor O/E is thus > 1.0, the combined application of the active ingredients leads to a synergistic antifungal effect.

The results clearly demonstrate that the antifungal composition comprising both natamycin and a pyrimidine fungicide protect bananas better against mould growth than natamycin or a pyrimidine fungicide alone.

Hence, the combination of natamycin and a pyrimidine fungicide has synergistic antifungal activity on bananas.

**Example 2**

*Treatment of strawberries*

Twelve fresh, organic strawberries are used per treatment. Each strawberry is wounded with a 0.5 mm long cut and each wound is inoculated with 10 μl of a *Botrytis cinerea* suspension containing 1×10⁵ of spores/ml. After a 2-hour incubation period at 20°C, each strawberry is dipped individually for 1 minute in a freshly prepared aqueous antifungal composition comprising either natamycin (DSM Food Specialties, Delft, The Netherlands), bupirimate or both. In addition, the pyrimidine fungicides diflumetorim, dimethirimol, ethirimol, fenarimol, ferimzone, nuarimol and triarimol alone or in combination with natamycin are tested. The antifungal compositions also comprise 1.00% (w/w) methylhydroxyethylcellulose (MHEC), 0.40% (w/w) xanthan gum, 0.20% (w/w) anti-foaming agent, 0.30% (w/w) citric acid, 0.39% (w/w) lactic acid and 0.11 % (w/w) potassium sorbate. The pH of the composition is 4.0. A composition without natamycin or a pyrimidine fungicide is used as control. The treated strawberries are incubated in a closed box in the dark at 20°C.

After incubation, the mould growth on the strawberries is assessed in a twofold manner: (i) the number of moulded strawberries per total of 12 strawberries is counted; and (ii) the antifungal activity (in %) of the individual and combined active ingredients is determined by calculating the reduction in mould growth observed on the strawberries treated with the antifungal composition in comparison to the mould growth on the strawberries treated with the control composition according to the Colby method described in Example 4 (Colby, 1967).

The results demonstrate that the antifungal composition comprising natamycin and a pyrimidine fungicide have a stronger antifungal activity on strawberries than natamycin or a pyrimidine fungicide alone.

Hence, the combined application of natamycin and a pyrimidine fungicide synergistically reduces mould growth on strawberries.

## Example 3

*Treatment of mandarins*

Ten fresh, organic mandarins are used per treatment. The peel of each mandarin is wounded once using a cork borer according to the method described by de Lapeyre de Bellaire and Dubois (1987). Subsequently, each wound is inoculated with 10 μl of a *Penicillium italicum* suspension containing 1×10⁴ of spores/ml. After incubation for 2 hours at 20°C, the mandarins are dipped individually for 1 minute in a freshly prepared aqueous antifungal composition comprising either natamycin (DSM Food Specialties, Delft, The Netherlands), bupirimate or both. In addition, the pyrimidine fungicides diflumetorim, dimethirimol, ethirimol, fenarimol, ferimzone, nuarimol and triarimol alone or in combination with natamycin are tested. In addition, the antifungal compositions comprise 3.1% (w/w) beeswax, 0.76% (w/w) glycerol, 0.66% (w/w) polyoxyethylene sorbitan monostearate (Tween 60), 0.03% (w/w) methylhydroxyethylcellulose (MHEC), 0.02% (w/w) xanthan gum, 0.02% (w/w) anti-foaming agent, 0.15% (w/w) citric acid and 0.01% (w/w) potassium sorbate. The pH of the composition is 4.0. A composition without natamycin or a pyrimidine fungicide is used as control.

The treated mandarins are incubated in a closed box in the dark at 20°C and assessed on mould growth after 25, 28, 31 and 34 days of incubation. The antifungal activity (in %) of the individual and combined active ingredients is determined by calculating the reduction in mould growth observed on the mandarins treated with the antifungal composition in comparison to the mould growth on the mandarins treated with the control composition according to the Colby method (Colby, 1967) described in Example 1 and 2.

The results prove that the antifungal composition comprising natamycin and a pyrimidine fungicide is superior to the compositions comprising natamycin or a pyrimidine fungicide alone in preventing mould growth on mandarins.

Thus, the combined application of natamycin and a pyrimidine fungicide synergistically reduces mould growth on mandarins.

## Example 4

*In vitro antifungal activity*

To demonstrate synergistic antifungal activity of the combination of natamycin with a pyrimidine fungicide against *Botrytis cinerea,* an *in vitro* assay is conducted using 96-well microtiter plates. The following compositions are tested:

- Control (no active ingredient),
- natamycin (DSM Food Specialties, Delft, The Netherlands),
- a pyrimidine fungicide,
- natamycin + a pyrimidine fungicide.

After filling each well of a microtiter plate with 92 μl of PCB medium, the active ingredient(s) are added from separate stock solutions prepared in PCB medium or methanol, which resulted in an intermediate volume of 100 μl per well. Subsequently, 100 μl of a *Botrytis cinerea* suspension prepared in PCB medium is used to inoculate each well with 2.5 x 10³ spores/ml. Each well thus contains a final volume of 200 μl and < 1% of methanol, which does not affect growth of *Botrytis cinerea* (data not shown).

After incubation of the microtiter plates at 25°C, the *in vitro* antifungal activity (%) of the individual active ingredients is assessed by calculating the reduction in mould growth observed in the presence of the active ingredient in comparison to the mould growth observed in the absence of the active ingredient. The expected antifungal activity (E in %) of the active ingredient combination is calculated according to the Colby equation (Colby, 1967):

$$E = X + Y - [(X \cdot Y) / 100]$$

wherein X and Y are the observed antifungal activities (in %) of the individual active ingredients X and Y, respectively. If the observed antifungal activity (O in %) of the combination exceeds the expected antifungal activity (E in %) of the combination and the resulting synergy factor O/E is thus > 1.0, the combined application of the active ingredients leads to a synergistic antifungal effect.

The results demonstrate that both the natamycin + pyrimidine fungicide combination have much stronger antifungal activity against *Botrytis cinerea* than natamycin and a pyrimidine fungicide individually.

Hence, the combined application of natamycin and a pyrimidine fungicide synergistically inhibits growth of *Botrytis cinerea.*

## REFERENCES

Brent KJ, Carter GA, Hollomon DW, Hunter T, Locke T and Proven M (1989), Factors affecting build-up of fungicide resistance in powdery mildew in spring barley. Neth. J. Pl. Path. 95 Supplement 1: 31-41.

Colby SR (1967), Calculating synergistic and antagonistic responses of herbicide combination. Weeds 15: 20-22.

Gubler WD, Ypema HL, Ouimette DG and Bettiga LJ (1996), Occurrence of resistance in Uncinula necator to triadimefon, myclobutanil, and fenarimol in California grapevines. Plant Dis. 80: 902-909.

Lapeyre de Bellaire de L and Dubois C (1987), Distribution of Thiabendazole-Resistant Colletotrichum musae Isolates from Guadeloupe Banana Plantations. Plant Disease 81:1378-1383.

Schepers HTAM (1984), Persistence of resistance to fungicides in Sphaerotheca fuliginea. Neth. J. Pl. Path. 90: 165-171.

Slinker BK (1998), The Statistics of Synergism. Journal of Mol. and Cell. Cardiology 30:723-731.

## Claims

1. A composition comprising a polyene antifungal compound and at least one antifungal compound from the family of pyrimidine fungicides.

2. A composition according to claim 1, wherein the at least one antifungal compound from the family of pyrimidine fungicides is selected from the group consisting of bupirimate, diflumetorim, dimethirimol, ethirimol, fenarimol, ferimzone, nuarimol and triarimol.

3. A composition according to claim 1 or 2, wherein the polyene antifungal compound is natamycin.

4. A composition according to any one of the claims 1 to 3, wherein the composition further comprises at least one additional compound selected from the group consisting of a sticking agent, a carrier, a colouring agent, a protective colloid, an adhesive, a herbicide, a fertilizer, a thickening agent, a sequestering agent, a thixotropic agent, a surfactant, a further antimicrobial compound, a detergent, a preservative, a spreading agent, a filler, a spray oil, a flow additive, a mineral substance, a solvent, a dispersant, an emulsifier, a wetting agent, a stabiliser, an antifoaming agent, a buffering agent, an UV-absorber and an antioxidant.

5. A composition according to any one of the claims 1 to 4, wherein the amount of the polyene antifungal compound is in the range from 0.005 g/l to about 100 g/l and the amount of the at least one antifungal compound from the family of pyrimidine fungicides is in the range from about 0.0001 g/l to about 2000 g/l.

6. A kit comprising a polyene antifungal compound and at least one antifungal compound from the family of pyrimidine fungicides.

7. A method for protecting a product against fungi by treating the product with a polyene antifungal compound and at least one antifungal compound from the family of pyrimidine fungicides.

8. A method according to claim 7, wherein the product is treated with a composition according to any one of the claims 1 to 5 or a kit according to claim 6.

9. A method according to claim 7 or 8, wherein the product is selected from the group consisting of a food product, a feed product, a pharmaceutical product, a cosmetic product and an agricultural product.

10. A method according to claim 9, wherein the product is an agricultural product.

11. A method according to claim 10, wherein the product is treated post-harvest.

12. A product comprising a polyene antifungal compound and at least one antifungal compound from the family of pyrimidine fungicides.

**13.** A product according to claim 12, wherein the product is selected from the group consisting of a food product, a feed product, a pharmaceutical product, a cosmetic product and an agricultural product.

**14.** A product according to claim 13, wherein the product is an agricultural product.

**15.** Use of a polyene antifungal compound and at least one antifungal compound from the family of pyrimidine fungicides to protect a product against fungi.

Europäisches
Patentamt

European
Patent Office

Office européen
des brevets

# EUROPEAN SEARCH REPORT

Application Number

EP 12 16 6258

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/110080 A2 (BASF AG [DE]; BLETTNER CARSTEN [DE]; GEWEHR MARKUS [DE]; GRAMMENOS WAS) 24 November 2005 (2005-11-24) * claim 1 * | 1-15 | INV. A01N43/90 A01N43/54 |

-----

TECHNICAL FIELDS
SEARCHED        (IPC)

A01N

The present search report has been drawn up for all claims

| Place of search | Date of completion of the search | Examiner |
|---|---|---|
| Munich | 20 July 2012 | Bertrand, Franck |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 12 16 6258

This annex lists the patent family members relating to the patent documents cited in  the above-mentioned European search report.
The members are as contained in the European Patent Office EDP file on
The European Patent Office is in no way liable for these particulars which are merely given for the purpose of information.

20-07-2012

| Patent document cited in search report | Publication date | Patent family member(s) | | Publication date |
|---|---|---|---|---|
| WO 2005110080 A2 | 24-11-2005 | BR | PI0509783 A | 23-10-2007 |
| | | EP | 1746892 A2 | 31-01-2007 |
| | | JP | 2007537193 A | 20-12-2007 |
| | | US | 2008039319 A1 | 14-02-2008 |
| | | WO | 2005110080 A2 | 24-11-2005 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BRENT KJ ; CARTER GA ; HOLLOMON DW ; HUNTER T ; LOCKE T ; PROVEN M.** Factors affecting build-up of fungicide resistance in powdery mildew in spring barley. *Neth. J. Pl. Path.,* 1989, vol. 95 (1), 31-41, Neth. J. Pl. Path.
- **COLBY SR.** Calculating synergistic and antagonistic responses of herbicide combination. *Weeds,* 1967, vol. 15, 20-22
- **GUBLER WD ; YPEMA HL ; OUIMETTE DG ; BETTIGA LJ.** Occurrence of resistance in Uncinula necator to triadimefon, myclobutanil, and fenarimol in California grapevines. *Plant Dis.,* 1996, vol. 80, 902-909
- **LAPEYRE DE BELLAIRE DE L ; DUBOIS C.** Distribution of Thiabendazole-Resistant Colletotrichum musae Isolates from Guadeloupe Banana Plantations. *Plant Disease,* 1987, vol. 81, 1378-1383
- **SCHEPERS HTAM.** Persistence of resistance to fungicides in Sphaerotheca fuliginea. *Neth. J. Pl. Path.,* 1984, vol. 90, 165-171
- **SLINKER BK.** The Statistics of Synergism. *Journal of Mol. and Cell. Cardiology,* 1998, vol. 30, 723-731